(19) Europäisches Patentamt
European Patent Office
Office européen des brevets

(11) EP 0 936 818 A1

(12) EUROPEAN PATENT APPLICATION

(43) Date of publication:
18.08.1999 Bulletin 1999/33

(51) Int. Cl.⁶: H04N 9/78

(21) Application number: 98102533.1

(22) Date of filing: 13.02.1998

(84) Designated Contracting States:
AT BE CH DE DK ES FI FR GB GR IE IT LI LU MC
NL PT SE
Designated Extension States:
AL LT LV MK RO SI

(71) Applicant: HARRIS CORPORATION
Melbourne Florida 32919 (US)

(72) Inventor: Demmer, Walter
90411 Nürnberg (DE)

(74) Representative:
Liesegang, Roland, Dr.-Ing.
FORRESTER & BOEHMERT
Franz-Joseph-Strasse 38
80801 München (DE)

(54) Method of digitally decoding a composite video signal and a digital decoder for composite video signals

(57) The present invention provides a method of digitally decoding a composite video signal (CVBS), the composite video signal comprising luminance and chrominance components, including the steps of: sampling the video signal to obtain a plurality (N) of sample values of the video signal; performing a Walsh-Hadamard transformation (WHT) on said plurality of sample values to obtain WHT coefficients; comparing at least a first one of said WHT coefficients ($WHT_{1,0}$) with a threshold value to determine whether a correction of said WHT coefficients is advisable; adjusting at least a second one of said WHT coefficients ($WHT_{0,1}$, $WHT_{0,2}$), when in step (c) it is determined that a correction of said WHT coefficients is advisable; and deriving the luminance and chrominance components of the composite video signal from the WHT coefficients.

Fig. 5

EP 0 936 818 A1

## Description

The present invention relates to a method of digitally decoding a composite video signal and to a digital decoder for composite video signals. More particularly, the present invention relates to a digital decoding method and means using an adaptive comb filter strategy for the improvement of the luminance/chrominance separation in case of color changing vertically in the video signal for elimination of the so called "Hanging Dot Effect".

Composite video signals are essentially composed of a brightness signal or luminance component (Y), two color difference signals or chrominance components (U,V or I,Q), vertical and horizontal sync signals (VS, HS), and a blanking signal (BL). The nature of composite video signals, such as NTSC and PAL signals, is well known to the man skilled in the art. Some of the main principle of these signals are also explained in our earlier European patent applications EP-A-0 690 621, EP-A-0 690 631, and EP-A-0 690 632, which describe the technology on which the present invention is based and which will be referred to later in the course of the description; the disclosures of these three European patent applications are incorporated by reference.

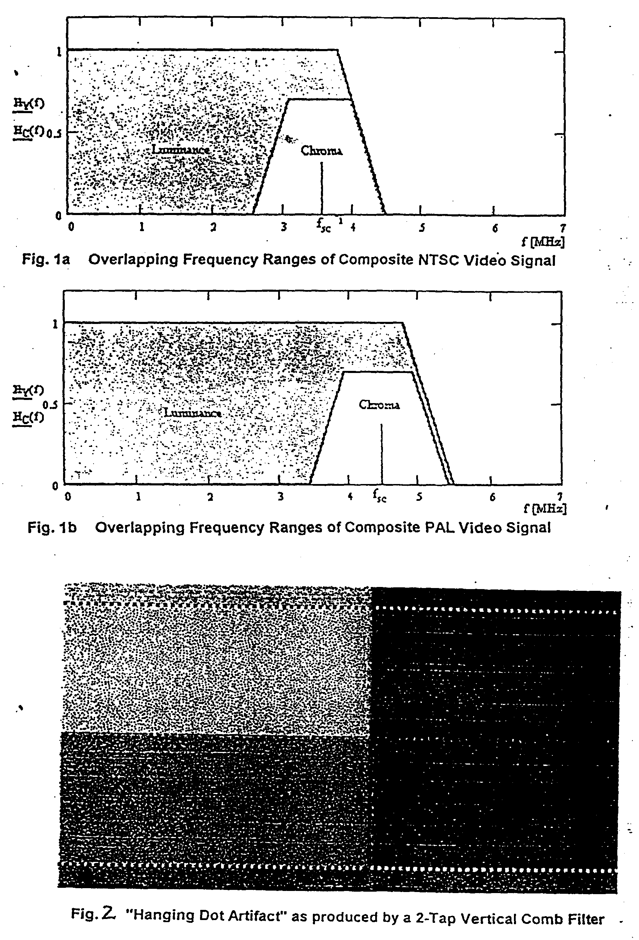

When color TV was first introduced, composite video systems, such as NTSC, PAL, and SECAM, were the preferable choice because of backward compatibility with existing black and white TV receivers as well as forward compatibility allowing color TV sets to receive widespread monochrome transmissions without adaption. All the different composite video standards and their sub-standards make use of high frequency regions of the bandwidth available on a TV channel (approx. 5 ...6 MHz) to be shared by luminance and chrominance information, leaving the low frequency portion of the spectrum to the luminance and the horizontal/vertical synchronisation signals. The overlapping luminance and chrominance frequency ranges of composite NTSC and PAL video signals are shown in figures 1a and 1b, respectively.

At the time of introduction of the first color TV receivers, even relatively simple analog filters were adequate to sufficiently separate the luminance and the chrominance components from the composite video signal. With the subsequent improvements of camera, signal processing, transmission and display technologies, the simple chroma notch filter outputting the luminance signal and the chroma band pass filter outputting the chrominance signal soon became the performance bottle neck. Not even the most demanding specifications of these filters could potentially solve the problems arising with growing bandwidth of the luminance and the chrominance signal leading to undesirable cross-talk between these components. The luminance signal also occupying (portions of) the spectral region originally reserved to the chrominance component falsely becomes decoded as color (shimmering colors of fishbone jackets, etc.) whereas color transients cause a superimposed luminance dot pattern along the contours of colored objects. The first has been known as "cross color" and the later one as "cross luminance".

When taking a closer look at the details of the video signal spectrum, a line spectrum is revealed, predominantly concentrating the spectral energy of the luminance signal at integer multiples of the line frequency. For NTSC and PAL, the chrominance spectrum also culminates at distinct frequencies, whereas the FM-modulated SECAM chrominance signal consisted of a semi-continuous Bessel spectrum. In case of NTSC, the spectral peaks of the chrominance components occur half-way interlaced between the peaks (spectral lines) of the luminance line spectrum, e.g. at odd integer multiples of half the line frequency, whereas in case of PAL, the spectral peaks occur at odd integer multiples of a quarter of the line frequency.

Comb filters for separation of the luminance and chrominance components from a composite video signal rely on the assumption that those components are spectrally interleaved. As explained above, the spectral interleaving results from the luminance spectrum predominantly occupying relatively narrow frequency regions at integer multiples of the horizontal line frequency, whereas the chrominance spectrum of a composite NTSC signal peaks half way between such integer multiples of the horizontal line frequency (in case of PAL at 1/4 and 3/4 between integer multiples of the horizontal line frequency).

The composite video signals having a interleaved periodic spectrum can be separated by means of said comb filter. In the most simple case, a comb filter is realized by adding or subtracting a undelayed signal and its corresponding delayed signal. As the signal delay corresponds to a phase shift, linearly increasing with the frequency, in case of an addition of the undelayed and the delayed signal the common mode component of the signals is doubled and signal components having a phase shift of 180° are eliminated; signal components having a phase shift of 360° are again doubled and signal components having a phase shift of 540° are eliminated, etc.

Comb filters for separating the luminance and chrominance components of a composite video signal use line buffers for obtaining a signal delay of one line interval. The fact that vertically aligned corresponding video pixels are added (or subtracted) has led to the name "vertical" comb filter. One embodiment of such a (non-adaptive) vertical comb filter is described in our European patent application EP-A-0 690 632.

One problem, for all the vertical comb filters is caused by the fact that a video scenery may consist of contours at all angles. Yet, the spectral properties and processing of the video signal discussed above are based on the assumption that only vertical contours (horizontal changes) may occur. In case of horizontal contours, the use of vertical comb filters may lead to an exchange (or swap) of the luminance and the chrominance lines spectrum for NTSC (and diagonals for PAL). Any sudden change of colors in the vertical direction causes a spatio-temporal modulation of the chrominance component with half the horizontal line frequency. Hence, the basic assumption of the interleaved nature of the luminance and the chrominance components fails under these circumstances. In a worst case scenario, if the color of any given pixel in one line suddenly changes to its opposite (inverse) color for the pixel vertically below (next line), the spectral energy of the luminance and the chrominance components swap their respective spectral locations. In this case, a pronounced luminance dot pattern is displayed in the respective portions of the decoded image, known as the "Hanging Dot Effect".

Figure 2 illustrates this artifact by means of a magnified section of two vertically opposing color bar sequences.

This manifestation of the color sub-carrier not changing by the expected 180° from line to line can either be removed or canceled by means of field/frame filters and/or by temporarily reverting to a horizontal chroma notch filter. In a field/comb filter, interpolation of two successive fields would require huge amounts of memory for frame stores and, therefore, it currently may be regarded infeasible for consumer applications. Additionally, it would also be prone to performance reductions due to motion in the video scenery because it is based on the assumption that the contours do not move. The second approach involves an adaptation of the coefficients of the vertical comb filter to match the local properties of the composite video input signal.

To briefly summarize the above, the undesired luminance dot pattern represents the portion of the color sub-carrier not being canceled by the vertical comb filter due to incomplete phase reversal from line to line. Hence, the frequency of the dot pattern is equal to the color sub-carrier frequency. In order to suppress the dot pattern, spectral components in the vicinity of the color sub-carrier can be suppressed by means of a chroma notch filter, as mentioned above. However, in order to avoid the severe limitations of luminance bandwidth caused by the chroma notch filter, this filter shall only be activated if the so-called Hanging Dot pattern is detected.

It is an objective of the present invention to provide a new method of digitally decoding a composite video signal and a new digital video decoder which can efficiently detect a situation in which a Hanging Dot pattern is likely to occur and which can eliminate the Hanging Dot Effect from a demodulated and decoded displayed video image.

This objective is solved by a method according to claim 1 and a digital decoder according to claim 9, respectively.

The present invention is based on several considerations: Presently, a totally reliable detection or prediction of the occurrence of the Hanging Dot Effect does not seem to be possible. However, a sudden change of the signal components in a vertical direction of the video image indicating horizontal contours can be detected and will indicate a certain likelihood of the occurrence of the Hanging Dot Effect. Therefore the detection of the dot pattern shall be made dependent on the criterion that the horizontal local average of neighbouring pixels exceeds a certain minimum vertical change from line to line. In this case, the comb filter used for separating the luminance and chrominance components shall be partially suppressed, and a chroma notch filter is activated. Additionally, activation and disactivation of the chroma notch filter shall occur gradually to avoid sudden bandwidth fluctuations that would result in jagged edges in the image. The reduction of the bandwidth, when using the chroma notch filter, as it is typical for a receiver having no comb filter, seems to be particularly acceptable because it will occur in a case when there are mainly vertical signal changes on which the chroma notch filter has no negative influence.

The above strategies are applied to a method for digitally decoding video signals and to a digital video signal decoder employing a Walsh-Hadamard Transformation (WHT). A method and a digital decoder for composite video signals using the Walsh-Hadamard Transformation was for the first time disclosed in the three above cited European patent applications, EP-A-0 690 621 EP-A-0 690 631, and EP-A-0 690 632, which are incorporated by reference.

Applying the above strategy with minimum effort and minimal changes to the known WHT based architecture of the video decoder is possible by providing a suitable interpretation of the significance of the individual WHT coefficients. These WHT coefficients can be used both for detecting or predicting the Hanging Dot Effect and for adjusting the filter coefficients to achieve a gradual transition between the vertical comb filter mode (normal mode) and the chroma notch filter mode (for elimination of the Hanging Dot Effect).

According to a first aspect, the present invention provides a method of decoding a composite video signal, the composite video signal comprising luminance and chrominance components, including the steps of:

(a) sampling the video signal to obtain a plurality (N) of sample values of the video signal;
(b) performing a Walsh-Hadamard transformation (WHT) on said plurality of sample values to obtain WHT coefficients;
(c) comparing at least a first one of said WHT coefficients with a threshold value to determine whether a correction of said WHT coefficients is advisable;
(d) adjusting at least a second one of said WHT coefficients, when in step (c) it is determined that a correction of said WHT coefficients is advisable; and
(e) deriving the luminance and chrominance components of the composite video signal from the WHT coefficients.

In one embodiment of the invention said first WHT coefficient reflects a line-to-line difference of a horizontal local average of neighbouring sample values in subsequent lines of the video signal. If the first WHT coefficient exceeds the threshold, two second WHT coefficients reflecting a common mode component ot the color sub-carrier are - preferably gradually, adjusted. Said two second WHT coefficients are advantageously multiplied with a variable correction factor CF which is a function of at least a further, third one, of said WHT coefficients.

According to a second aspect, the pesent invention provides a digital decoder for composite video signals (CVBS), the composite video signals comprising luminance and chrominance components, having: transformation means for transforming a plurality (N) of sample values of the video signal by means of a Walsh-Hadamard transformation (WHT) to obtain a WHT coefficients; comparator means (64) for comparing at least a first one of said WHT coefficients with a threshold value to determine whether a correction of said WHT coefficients is advisable; correction means for adjusting at least a second one of said WHT coefficients when it is determined that a correction of said WHT coefficients is advisable; and decoder means for deriving the luminance and chrominance components of the composite video signal from the corrected WHT coefficients.

Said correction means preferably comprise multiplier means for multiplying said second WHT coefficient(s) with a correction factor CF.

The inventive concept of suitably interpreting the WHT coefficients may also be used to predict or detect other irregularities of a video image produced by a composite video signal (CVBS), the correction of said effects being subsequently performed as described herein of by some other suitable means. This method includes the steps of: sampling the video signal to obtain a plurality (N) of sample values of the video signal; performing a Walsh-Hadamard transformation on said plurality of sample values to obtain WHT coefficients; and comparing at least one of said WHT coefficients with a threshold value or funtion to determine whether said irregularity has occured or is likely to occur.

The inventive concept can further be used to correct such a irregularity produced by the composite video signal (CVBS), the irregularity itself being detected as described herein or by some other suitable means. This method includes the steps of:

(a) sampling the video signal to obtain a plurality (N) of sample values of the video signal; (b) performing a Walsh-Hadamard transformation (WHT) on said plurality of sample values to obtain WHT coefficients; (c) determining whether said irregularity has occured or is likely to occur; and (d) adjusting at least one of said WHT coefficients, when in step (c) it is determined that said irregularity has occured of is likely to occur.

All of the details of the method and decoder according to the first and second aspect of the present invention described herein may be applied correspondingly to the above mentioned methods of detecting and correcting irregularities of the video image.

The present invention has the great advantage that when using the Walsh-Hadamard Transformation for separating, demodulating and decoding a composite video signal said signal is separated into a plurality of separate frequency bands which can be used directly for filtering (separating) the composite signals and detecting the likelihood of the occurrence of a Hanging Dot Effect or the like, eliminating said effect and subsequently demodulating and decoding the signal. These processes largely depend on the right interpretation of the WHT coefficients

The present invention will become more easily understood with reference to the following description of one embodiment of the invention with reference to the drawings. The described embodiment is directed to a 2 x 4 Walsh-Hadamard Transformation using four neighbouring sample values of two successive lines of the video signal. It has to be understood that the present invention may equally well be applied to different numbers of sample values per line and lines per transformation. The invention is further applicable to different video standards and non-standard video signals. In the figures:

| | |
|---|---|
| Figures 1a and 1b | show overlapping frequency ranges of composite NTSC and PAL video signals, respectively; |
| Figure 2 | shows a magnified section of two vertically opposing color bar sequences for illustrating the Hanging Dot artifact as produced by a vertical comb filter; |
| Figures 3a to 3h | show a spatial interpretation of Walsh-Hadamard Transform Coefficients; and |
| Figures 4a to 4h | show a spectral interpretation of Walsh-Hadamard Transform Coefficients; |
| Figure 5 | shows a block circuit diagram of one embodiment of the digital decoder according to the invention; |
| Figure 6 | shows a circuit diagram for realizing the vertical WHT in the decoder of figure 5; |
| Figure 7 | shows a circuit diagram for realizing the horizontal WHT in the decoder of figure 5; and |
| Figure 8 | shows a circuit diagram for realizing the adaption of the WHT coefficients in the decoder of figure 5. |

Figures 1a and 1b show the overlapping frequency ranges of composite NTSC video signals and PAL video signals, respectively, for illustrating the usefulness of a chroma notch filter and a chroma band pass filter for separating the luminance and chrominance components from the composite video signal, as explained in the introductory part of this application.

Figure 2 shows the Hanging Dot Effect as produced by a vertical comb filter using two successive video lines, i.e. so called 2-Tap Vertical Comb Filter. As can be recognized from figure 2, at vertical contours or horizontal changes of the video image, in particular when one color is changed to its opposite color, due to the 180° phase shift of the chrominance modulation (in addition to the 180° phase shift from line to line of the color sub-carrier), the "opposite" chrominance component is interpreted as a luminance signal.

In order to recognize such vertical color changes which bear the risk of occurrence of the Hanging Dot Effect and to eliminate the Hanging Dot Effect the present invention provides a digital video decoder and a digital decoding method using the Walsh-Hadamard Transformation (WHT).

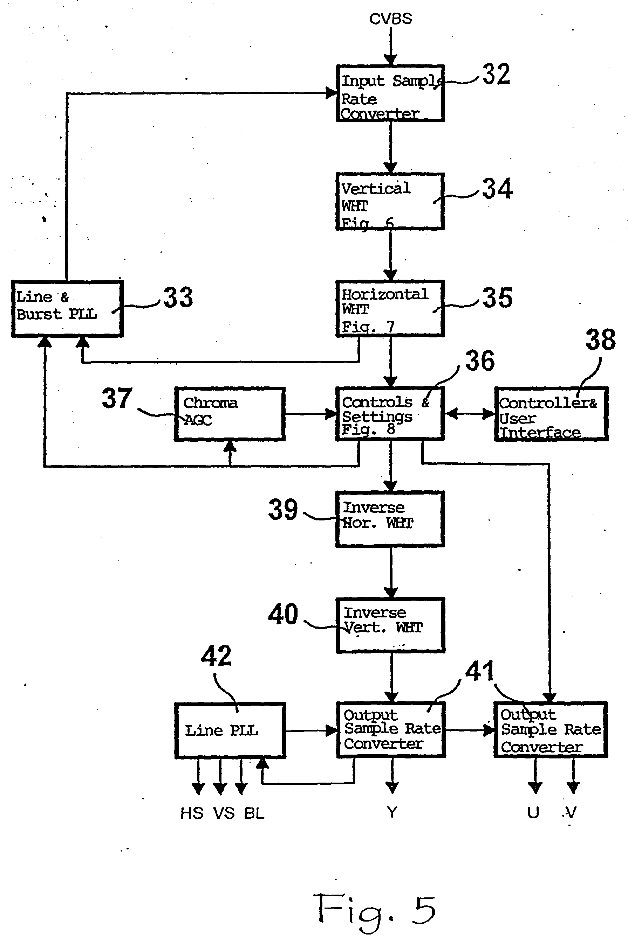

Figure 5 shows the block diagram of a preferred embodiment of the digital decoder according to the invention. The digital decoder is comprised of an input sample rate converter (SRC) 32, a line and burst phase-locked loop (line & burst PLL) 33, a vertical WHT circuit 34 and a horizontal WHT circuit 35, a control and setting circuit (controls and settings) 36, a chroma automatic gain control circuit 37 (Chroma AGC), a controller and user interface 38, a horizontal IWHT circuit 39 and a vertical IWHT circuit 40, an output sample rate converter 41 and a line phase-locked loop (line PLL) 42.

The composite video signal (CVBS) digitized at the clock frequency of a host system, such as a computer, forms the input of the input sample rate converter 32. The line and burst PLL 33 controls the input sample rate converter 32 in such a way that the input video signal digitized with the predetermined clock frequency is converted into a signal with sample values at a second virtual sampling frequency, which is four times the color sub-carrier frequency. By choosing the "virtual" sampling frequency as four times the color sub-carrier frequency on the one hand the Shannon-Nyquist theorem ($f_a > 2 \cdot f_{sc}$) is fulfilled and on the other hand there is an integer number of sample values per video line, namely 910 sample values per line for an NTSC signal and 1135 sample values per line for a PAL signal, so that it is possible to combine the advantages of a burst-locked architecture, in which the sample signal is an even multiple of the color sub-carrier frequency, and the advantages of the line-locked architecture, in which the sampling frequency is an integer multiple of the line frequency.

In an alternative embodiment the clock frequency of the digital decoder can be directly set to four times the color sub-carrier frequency of the input video signal and the video signal is then directly digitized with this decoder clock frequency, so that a sample rate conversion is not necessary.

The sampled values of the composite video signal (CVBS) are then passed onto the vertical WHT circuit 34, whose output supplies the input signals for the following horizontal WHT circuit 35. Both circuits are described in greater detail hereinafter.

The vertical WHT circuit essentially forms a vertical low-pass filter and a vertical high-pass filter, in which two corresponding sample values of two video image lines being added and subtracted, respectively. In the horizontal WHT circuit the high and low-pass filtered sample values, in each case two lines are transformed in alternating manner into the WHT domain by means of Walsh-Hadamard transformation. The resulting WHT matrix is then inputted into the control and setting circuit 36, in which on the one hand the chrominance signal components U and V are separated from the luminance signal component Y and on the other hand all the controls and settings of the signal are centrally performed in the manner described hereinafter.

The WHT matrix from which the chrominance signal components have been separated, is then transformed back into the pixel domain by the horizontal IWHT circuit 39 and the vertical IWHT circuit 40 and the decoded video signal components U, V and Y, optionally following an output sample rate conversion by the output sample rate converter 41, are outputted by the digital decoder.

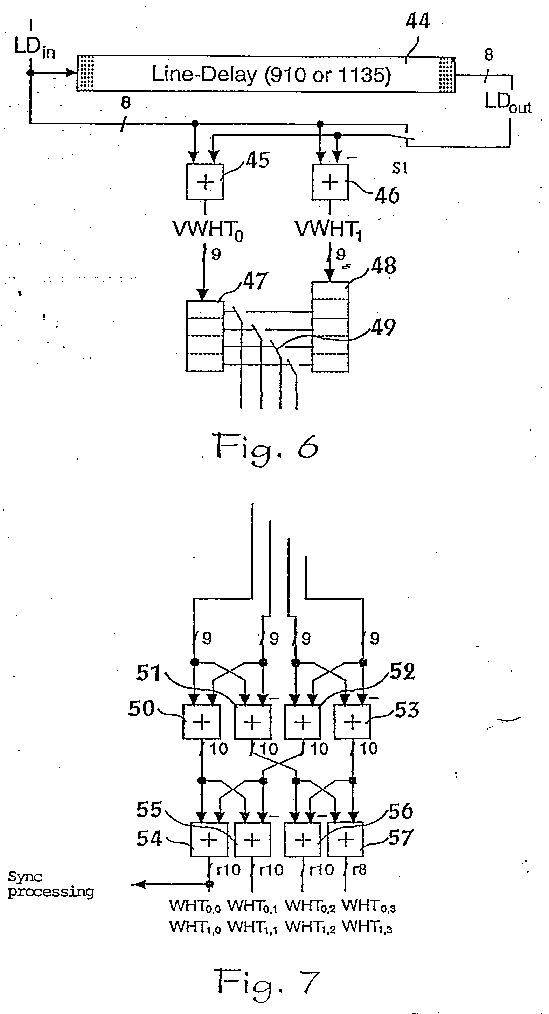

Figure 6 shows the structure of the vertical WHT circuit 34 of figure 5, which comprises the line delay means 44, two adders 45, 46, two register stacks 47, 48 and a multiplexer circuit 49. The line delay means 44 in each case stores one line of sample values of the video signal, i.e. 910 values for NTSC signals and 1135 values for PAL signals. As shown in figure 6 a vertical low-pass filter is formed, in which in each case two vertically aligned sample values, one from the actual video image line and one from the delayed image line, are added in the adder 45, whilst the subtraction of the same two sample values in the adder 46 provides a vertical high-pass filter. As explained hereinbefore, the vertical alignment requires a horizontal line delay. With a clock frequency of $4 \cdot f_{sc}$ the line delay device has 910 individual delay stages for NTSC signals and requires 1135 delay stages for PAL signals.

Two register stacks 47, 48 store the last four output values of the vertical low-pass filter 45 (VWHT$_0$) or the vertical high-pass filter 46 (VWGT$_1$), the register stacks 48 having an additional register, when compared with the buffer 47. The outputs of the registers of stacks 47 or 48 are then outputted in alternating parallel manner to the horizontal WHT circuit 35 by means of the multiplexer circuit 49 and as shown in figure 7. The horizontal WHT circuit of figure 7 comprises eight adders 50 to 57.

The horizontal WHT circuit shown in figure 7 simultaneously derives its four input signals from the vertical WHT stage 34, the multiplexer circuit 39 alternately outputting the vertical low-passed output values VWHT$_0$ and the vertical

high-passed output values $VWHT_1$. As a result a single horizontal WHT stage performs the entire two-dimensional Walsh-Hadamard transformation, the vertical low-pass filtered elements and the vertical high-pass filtered elements being processed in the multiplex operation. With each first clock pulse the horizontal WHT circuit obtains the WHT coefficients $WHT_{0,0}$ to $WHT_{0,3}$ and with each second clock pulse the WHT coefficients $WHT_{1,0}$ to $WHT_{1,3}$. As only one set of WHT coefficients is required for fulfilling the Nyquist theorem per eight clock cycles, the shown arrangement for the vertical and horizontal WHT's results in an oversampling of the WHT coefficients by a factor of 2, both in the vertical and horizontal direction.

It is pointed out that each individual output coefficient of the Walsh-Hadamard transformation represents a linear combination of all the input sample values (pixels) for said WHT, so that a single WHT output coefficient cannot be associated with any specific input sample value. In fact a set of WHT output coefficients represents the two-dimensional (spatial) spectrum of all the input sample values for a given block of a given size.

The basic principles of the Walsh-Hadamard Transformation are laid out in the cited European patent application EP-A-0 690 632 at the beginning of the detailed description of the drawings, the respective disclosure is incorporated by reference.

The basic design and operation of a digital data decoder using WHT is described and shown (figures 5 to 10) in the same European patent application EP-0 690 632, the respective disclosure is incorporated by reference.

One embodiment of the method of digitally decoding a composite video signal and compensating any Hanging Dot Effect which might be caused by said signal will now be described with reference to a composite video signal of the NTSC standard.

As explained above, according to a preferred embodiment, the digital decoder uses four neighbouring sample values of two successive lines of the video signal which are multiplied with a 4 x 4 WHT transform matrix $T_{WHT}$ to derive 2 x 4 WHT coefficients. The sample values are derived from the composite video signal at a sample rate which is four times the color sub-carrier of NTSC. The processing performed by the vertical WHT circuit of figure 6 and the horizontal WHT circuit of figure 7 can be expressed by the following transformation equation and results in a 2 x 4 WHT product matrix comprising eight WHT coefficients $WHT_{0,0}$ to $WHT_{1,3}$:

$$\begin{pmatrix} WHT_{0,0} & WHT_{1,0} \\ WHT_{0,1} & WHT_{1,1} \\ WHT_{0,2} & WHT_{1,2} \\ WHT_{0,3} & WHT_{1,3} \end{pmatrix} \begin{pmatrix} 1 & 1 & 1 & 1 \\ 1 & 1 & -1 & -1 \\ 1 & -1 & -1 & 1 \\ 1 & -1 & 1 & -1 \end{pmatrix} \begin{pmatrix} f_n(1) & f_{n-1}(1) \\ f_n(2) & f_{n-1}(2) \\ f_n(3) & f_{n-1}(3) \\ f_n(4) & f_{n-1}(4) \end{pmatrix} \cdot \begin{pmatrix} 1 & 1 \\ 1 & -1 \end{pmatrix}$$

wherein $f_n(1)$ to $f_n(4)$ represent four neighbouring sample values of a current video line, and $f_{n-1}(1)$ to $f_{n-1}(4)$ represent four neighbouring sampling values of a delayed (previous) video line. The first 4x4 WHT matrix corresponds to the horizontal WHT, and the secon 2x2 WHT matrix corresponds to the vertical WHT.

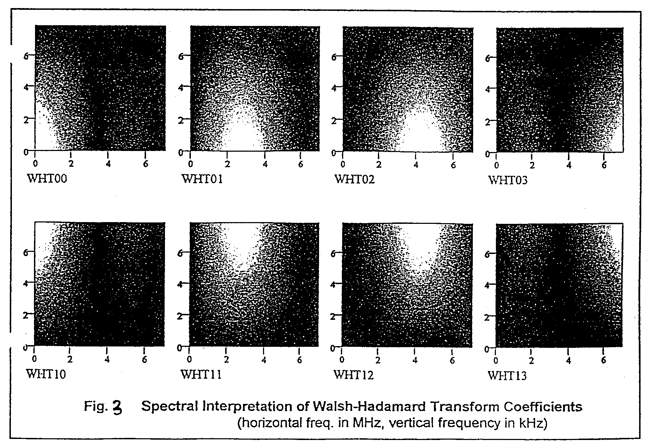

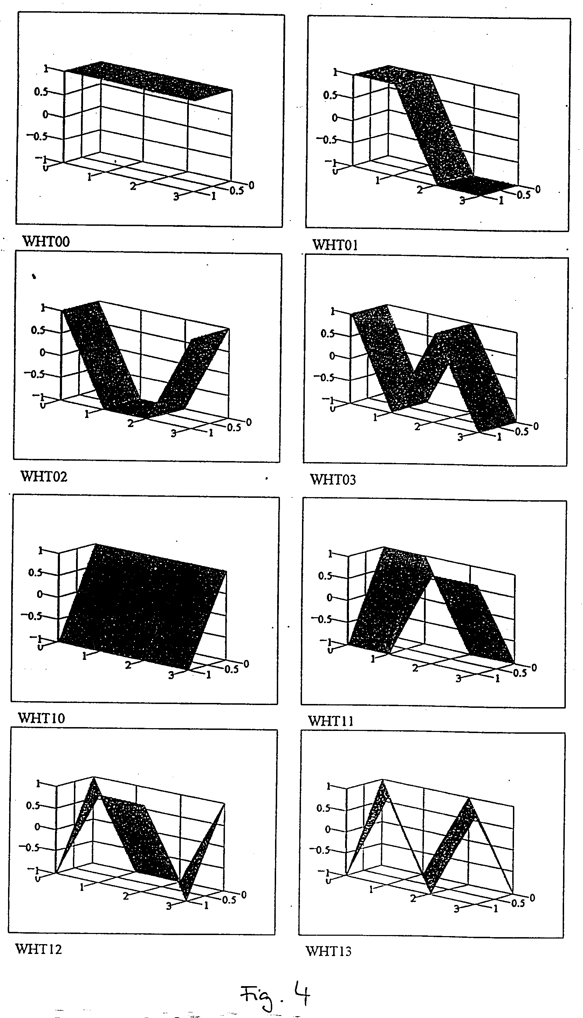

Figure 3 shows a 2-dimensional spectrum of the WHT coefficients as gray scale images (white= pass band, dark = stop band); whereas figure 4 shows a spatial interpretation of the WHT coefficients.

With the sampling rate (or after an input sample rate conversion) equaling four times the color sub-carrier frequency in the NTSC-standard, the coefficients $WHT_{1,1}$ and $WHT_{1,2}$ represent the two color difference signals U and V, respectively. After transformation of the input sample values to the WHT-domain these two coefficients can be used directly to filter or separate the two color difference signals U, V from the composite video signal by extracting these coefficients from the WHT product matrix.

Any common mode component of the color sub-carrier is revealed in the coefficients $WHT_{0,1}$ and $WHT_{0,2}$. Therefore, suppressing these two WHT coefficients prior to the inverse WHT (IWHT) of the WHT product matrix to derive the luminance signal would eliminate any dot pattern that would show otherwise due to the cross-talk of the modulated chrominance signal onto $WHT_{0,1}$ and $WHT_{0,2}$. Yet, in order to maintain maximum luminance bandwidth if no apparent dot pattern is present or likely to occur, suppression of $WHT_{0,1}$ and $WHT_{0,2}$ should only be activated if it is determined that the Hanging Dot Effect is likely to occur.

If the absolute value of coefficient $WHT_{1,0}$ exceeds a certain threshold (e.g. 8) this indicates a significant line-to-line change of a horizontal local average of (in this case 4) neighbouring sample values in subsequent lines of the video signal, i.e. a high probability of a vertical color change. Therefore, one criteria for suppressing the coefficients $WHT_{0,1}$ and $WHT_{0,2}$ (reflecting a common mode component of the color sub-carrier) is the absolute value of $WHT_{1,0}$. To avoid hard switching, gradual suppression of the coefficients $WHT_{0,1}$ and $WHT_{0,2}$ should be performed by multiplying these coefficients with a variable correction factor.

This variable correction factor preferably is a function of two further WHT coefficients, $WHT_{0,3}$ and $WHT_{1,3}$, which reflect a relatively high frequency component of the video signal, i.e. frequent changes of the video image in a horizontal and/or vertical direction. If such high frequency components are present in the video image, e.g. in form of a scenery where snow is falling, on the one hand, it is rather likely that any Hanging Dot Effect would be invisible in the video image and, on the other hand, suppressing the coefficients $WHT_{0,1}$ and $WHT_{0,2}$ (reflecting a common mode component of the color sub-carrier) would have a more negative effect on the overall quality of the video image than admitting the Hanging Dot Effect. Therefore, according to one embodiment of the invention, the correction factor is derived from the normalized sum of the absolute values of $WHT_{0,3}$ and $WHT_{1,3}$. If this normalized sum exceeds 1, $WHT_{0,1}$ and $WHT_{0,2}$ are left unchanged. In a particular embodiment, the correction factor can be determined as follows:

$$CF = 1 \text{ if } WHT_{1,0} \leqq 8$$

$$CF = 1 \text{ if } (|WHT_{0,3}|+|WHT_{1,3}|)/64 \geqq 1$$

$$CF = |WHT_{0,3}|+|WHT_{1,3}|)/64 \text{ otherwise}$$

Practical experiments have shown that a correction factor CF as defined above yields excellent performance in terms of Hanging Dot suppression while maintaining image quality and avoiding other artifacts like jagged edges of the image.

In the spectral domain (figure 3), the same circumstances have a different explanation. Provided a vertical transition from one line to the next is identified by $WHT_{1,0}$ any contribution of $WHT_{0,1}$ and $WHT_{0,2}$ that is not accompanied by (at least) some contribution of $WHT_{0,3}$ and/or $WHT_{1,3}$ must be considered to truly express orthogonal phases of the common mode residue of the color sub-carrier. As this common mode residue of the color sub-carrier is manifested by the Hanging Dot Effect, multiplication of the $WHT_{0,1}$ and $WHT_{0,2}$ by a correction factor of less than 1 consequently results in a reduction of the Hanging Dot Effect.

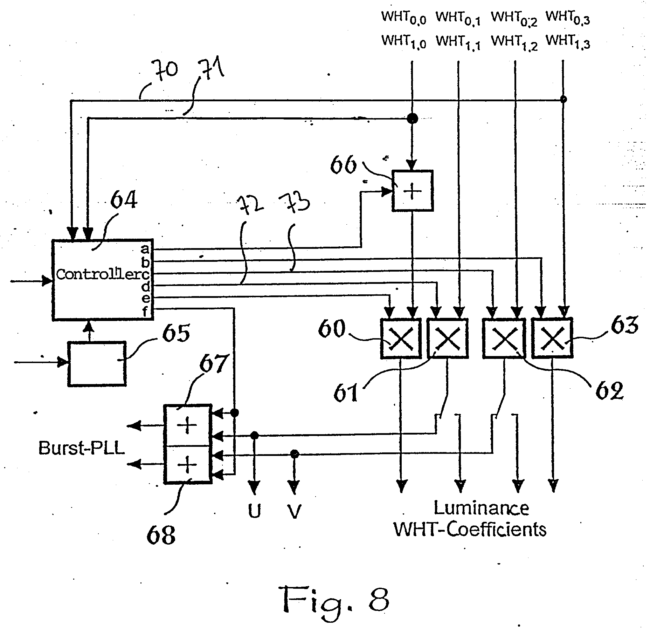

For implementing the present invention in a digital video decoder as described above and in the European patent application EP-A-0 690 632, it is only necessary to additionally tap the coefficients $WHT_{1,2}$, $WHT_{0,3}$ and $WHT_{1,3}$ and to apply these coefficients to a controller 64 as shown in figure 8.

Figure 8 shows the control and setting circuit 36 of the digital video decoder of figure 5. This circuit has four multipliers 60 to 63 which in the indicated manner are connected to a controller 64 and via an IC bus 65 to a user interface. At the output of the multipliers 60 to 63 the U and V chrominance signal components are outputted separately, corresponding to WHT coefficients $WHT_{1,1}$ and $WHT_{1,2}$.

By multiplying the correct WHT coefficients with suitable control and setting factors (a to f) the following control and setting options can be provided by the circuit of figure 8, the details of which are described in the cited European patent application EP-A-0 690 632: brightness, contrast, hue/tint, horizontal peaking/ smoothing, vertical peaking/smoothing, chroma AGC, horizontal sub sampling prefilter, vertical sub sampling prefilter, color killer.

Of interest for the present invention, however, are lines 70 and 71 which feed the coefficients $WHT_{1,0}$, $WHT_{0,3}$ and $WHT_{1,3}$ to the controller 64 for deciding whether a correction of WHT coefficients, i.e. an adaptation of the comb filter realized therein, is advisable and for deriving a correction factor CF, as described above. The coefficients $WHT_{1,0}$, $WHT_{0,3}$ and $WHT_{1,3}$ are processed in the controller 64 according to the above formula. The correction factor is outputted via lines 72 and 73 to gradually suppress the coefficients $WHT_{0,1}$ and $WHT_{0,2}$ in dependence of the probability of the Hanging Dot Effect being visible, as described above.

Making optimum use of the WHT architecture of the video decoder, the adaptive comb filter principle established above can be applied e.g. to a 2-line comb filter or a 3-line comb filter arrangement and to NTSC and PAL alike. In all cases, it has yielded impressive improvements at minimum additional complexity.

It could also be contemplated to use the interpretation of WHT coefficients as explained above for detecting and correcting further irregularities of the video image beyond the Hanging Dot Effect, by adjusting suitable other WHT coefficients.

The following additional considerations apply to decoding of PAL signals instead of NTSC signals.

The color sub-carrier frequency of PAL is about 4,43 MHz. At a line frequency of 15.625 kHz the color sub-carrier frequency is 383.75 times the line frequency. Additionally, the V signal is inverted alternately from line to line. Differing from NTSC, therefore, two sets of separate spectral lines are generated for U and V. At a constant modulation (no change of color) the dominant spectral line for U is at 283 3/4 times the line frequency and the dominant spectral line for V is at 283 1/4 times the line frequency.

Using the Walsh-Hadamard Transformation this results in a V component of the composite video signal corresponding to the sum of $WHT_{0,2}$ plus $WHT_{1,1}$. The U component is indicated by the difference of $WHT_{0,2}$ minus $WHT_{1,1}$. Therefore, when decoding the luminance signal (Y) by means of the inverse Walsh-Hadamard Transformation (WHT) the coefficients $WHT_{0,2}$ and $WHT_{1,1}$ (instead of $WHT_{1,2}$ and $WHT_{1,1}$ as for NTSC) are suppressed.

As will be apparent for man of ordinary skill in the art, the present invention can be realized in many modifications and variations of the embodiment described above. In particular, the order of the WHT, the number of sample values per line and lines per filter or transformation operation can be adapted to the particular requirements of the application. Also the criteria for deciding whether a correction of WHT coefficients is advisable as well as the determination of a correction factor could be altered as needed or desired. The invention is applicable to different video standards as well as non-standard video signals.

The features of the invention disclosed in the description, drawings and claims can be significant for the different embodiments of the invention, either separately or in the form of combinations.

**Claims**

1. A method of digitally decoding a composite video signal (CVBS), the composite video signal comprising luminance and chrominance components, including the steps of:

   (a) sampling the video signal to obtain a plurality (N) of sample values of the video signal;
   (b) performing a Walsh-Hadamard transformation (WHT) on said plurality of sample values to obtain a set of WHT coefficients;
   (c) comparing at least a first one of said WHT coefficients ($WHT_{1,0}$) with a threshold value to determine whether a correction of said WHT coefficients is advisable;
   (d) adjusting at least a second one of said WHT coefficients ($WHT_{0,1}$, $WHT_{0,2}$), when in step (c) it is determined that a correction of said WHT coefficients is advisable; and
   (e) deriving the luminance and chrominance components of the composite video signal from the WHT coefficients.

2. The method of claim 1, wherein said first WHT coefficient ($WHT_{1,0}$) reflects a line-to-line difference of a horizontal local average of neighbouring sample values in subsequent lines of the video signal.

3. The method of claim 1 or 2, wherein in step (d) two second WHT coefficients ($WHT_{0,1}$, $WHT_{0,2}$) reflecting a common mode component ot the color sub-carrier are adjusted.

4. The method of claim 3, wherein said two second WHT coefficients ($WHT_{0,1}$, $WHT_{0,2}$) are multiplied with a correction factor CF which is a function of at least a third one of said WHT coefficients ($WHT_{0,3}$, $WHT_{1,3}$).

5. The method of one of the preceding claims, wherein said second WHT coefficient(s) ($WHT_{0,1}$, $WHT_{0,2}$) are adjusted gradually.

6. The method of one of the preceding claims, wherein the composite video signal (CVBS) is digitized at or converted to a sampling frequency equaling four times the color sub-carrier frequency.

7. The method of one of the preceding claims, wherein each of four neighbouring sample values (f(1), f(2), f(3), f(4)) of two successive lines (n, n-1) of the video signal are transformed according to the following equation to derive a set of 2 x 4 WHT coefficients:

$$\begin{pmatrix} WHT_{0,0} & WHT_{1,0} \\ WHT_{0,1} & WHT_{1,1} \\ WHT_{0,2} & WHT_{1,2} \\ WHT_{0,3} & WHT_{1,3} \end{pmatrix} = \begin{pmatrix} 1 & 1 & 1 & 1 \\ 1 & 1 & -1 & -1 \\ 1 & -1 & -1 & 1 \\ 1 & -1 & 1 & -1 \end{pmatrix} \begin{pmatrix} f_n(1) & f_{n-1}(1) \\ f_n(2) & f_{n-1}(2) \\ f_n(3) & f_{n-1}(3) \\ f_n(4) & f_{n-1}(4) \end{pmatrix} \cdot \begin{pmatrix} 1 & 1 \\ 1 & -1 \end{pmatrix}$$

8. The method of claim 7, wherein in step (d) said second WHT coefficient(s) ($WHT_{0,1}$, $WHT_{0,2}$) are multiplied with a correction factor CF, which is:

$$CF = 1 \text{ if } WHT_{1,0} \leqq 8$$

$$CF = 1 \text{ if } (|WHT_{0,3}|+|WHT_{1,3}|)/64 \geqq 1$$

$$CF = |WHT_{0,3}|+|WHT_{1,3}|)/64 \text{ otherwise}$$

9. A digital decoder for composite video signals (CVBS), the composite video signals comprising luminance and chrominance components, having

transformation means (34, 35) for transforming a plurality (N) of sample values of the video signal by means of a Walsh-Hadamard transformation (WHT) to obtain a set of WHT coefficients;

comparator means (64) for comparing at least a first one of said WHT coefficients ($WHT_{1,0}$) with a threshold value to determine whether a correction of said WHT coefficients is advisable;

correction means (61, 62) for adjusting at least a second one of said WHT coefficients ($WHT_{0,1}$, $WHT_{0,2}$), when it is determined that a correction of said WHT coefficients is advisable; and

decoder means (60-63, 39, 40) for deriving the luminance and chrominance components of the composite video signal from the corrected WHT coefficients.

10. The decoder of claim 9, wherein said correction means comprise multiplier means (61, 62) for multiplying said second WHT coefficient(s) ($WHT_{0,1}$, $WHT_{0,2}$) with a correction factor CF.

11. A method of detecting an irregularity of a video image produced by a composite video signal (CVBS), including the steps of:

(a) sampling the video signal to obtain a plurality (N) of sample values of the video signal;
(b) performing a Walsh-Hadamard transformation (WHT) on said plurality of sample values to obtain a set of WHT coefficients;
(c) comparing at least one of said WHT coefficients ($WHT_{1,0}$) with a threshold value or function to determine whether said irregularity has occured or is likely to occur.

12. A method of correcting an irregularity in a video image produced by a composite video signal (CVBS), including the steps of:

(a) sampling the video signal to obtain a plurality (N) of sample values of the video signal;
(b) performing a Walsh-Hadamard transformation (WHT) on said plurality of sample values to obtain a set of WHT coefficients;
(c) determining whether said irregularity has occured or is likely to occur; and
(d) adjusting at least one of said WHT coefficients ($WHT_{0,1}$, $WHT_{0,2}$) in dependence of the result of step (c).

Fig. 1a    Overlapping Frequency Ranges of Composite NTSC Video Signal

Fig. 1b    Overlapping Frequency Ranges of Composite PAL Video Signal

Fig. 2.  "Hanging Dot Artifact" as produced by a 2-Tap Vertical Comb Filter

10

Fig. 3    Spectral Interpretation of Walsh-Hadamard Transform Coefficients
(horizontal freq. in MHz, vertical frequency in kHz)

WHT00 WHT01 WHT02 WHT03 WHT10 WHT11 WHT12 WHT13

Fig. 4

CVBS

Input Sample Rate Converter **32**

Vertical WHT Fig. 6 **34**

Line & Burst PLL **33**

Horizontal WHT Fig. 7 **35**

**38** Controller & User Interface

**37** Chroma AGC

Controls & Settings Fig. 8 **36**

**39** Inverse Hor. WHT

**40** Inverse Vert. WHT

**42** Line PLL

Output Sample Rate Converter **41**

Output Sample Rate Converter

HS  VS  BL

Y

U  V

Fig. 5

13

Fig. 6

Fig. 7

Fig. 8

European Patent Office

**EUROPEAN SEARCH REPORT**

Application Number

EP 98 10 2533

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | EP 0 690 632 A (HARRIS CORPORATION) 3 January 1996 * the whole document * | 1-12 | H04N9/78 |
| | | | **TECHNICAL FIELDS SEARCHED (Int.Cl.6)** |
| | | | H04N |

The present search report has been drawn up for all claims

| Place of search | Date of completion of the search | Examiner |
|---|---|---|
| THE HAGUE | 28 July 1998 | Pigniez, T |

EPO FORM 1503 03.82 (P04C01)